# DEMANDE DE BREVET EUROPEEN

(11) **EP 0 607 718 A1**
(43) Date de publication de la demande: **27.07.1994**
(21) Numéro de dépôt: 93403046.1
(22) Date de dépôt: 15.12.1993
(51) Int. Cl.: E05F 15/16, F16D 3/52, F16F 1/02, F16F 15/12

(54) **Motoréducteur destiné notamment à un lève-vitre électrique de véhicule**

(30) Priorité: 21.12.1992 FR 9215417
(71) Demandeur: ROCKWELL BODY AND CHASSIS SYSTEMS - FRANCE, en abrégé: ROCKWELL BCS - FRANCE, F-92082 Paris La Défense 2 (FR)
(72) Inventeur: Periou, Pierre, F-95000 Cergy Pontoise (FR); Fin, Enrico, Evergreen, CO 80439 (US)
(74) Mandataire: Martin, Jean-Paul

(57) **Abrégé**

s7 Ce motoréducteur comporte une roue dentée (1) d'entraînement d'un organe de sortie (2) monté sur son moyeu (4), et un ou plusieurs ressort(s) amortisseur(s) (6) interposé(s) entre la roue (1) et l'organe de sortie (2) ; le(les) ressort(s) amortisseur(s) (6) est(sont) métallique(s) et plat(s), formé(s) de deux branches flexibles (7) symétriques l'une de l'autre par rapport à un plan médian ; chaque branche comporte une circonvolution dont une première section (7) s'étend autour du moyeu (4), est prolongée par un repli (11) et une seconde section (9), terminée par un tronçon radial (12), un plat (13) d'appui sur une nervure (17) de la roue (1), et une griffe (14) de maintien du ressort dans la roue (1), autour du moyeu (4). Lorsque la vitre vient en arrêt de butée en fin de trajectoire, l'une des branches (7) est comprimée et se rapproche de l'autre, en amortissant l'arrêt de la rotation de la roue dentée (1). Ce(s) ressort(s) a(ont) un faible encombrement et une grande stabilité de fonctionnement.

## Description

La présente invention a pour objet un motoréducteur, destiné à entraîner un élément lié à son arbre de sortie, notamment un lève-vitre électrique de véhicule.

On sait qu'à la fin de sa trajectoire, la vitre entrai- née par un lève-vitre électrique rencontre une butée. L'arrêt intervient alors brusquement, alors que le moteur possède à cet instant une inertie très élevée, en raison de sa vitesse de rotation. Cette inertie doit être absorbée par un élément interne au réducteur. En général cet élément se situe entre la roue de la vis sans fin du réducteur et la sortie du motoréducteur. Très souvent cette fonction est remplie par des amortisseurs en caoutchouc ou en matière plastique, comme décrit dans le brevet DE-A-3 403 259.

Ce type d'amortisseur voit sa stabilité de fonctionnement se dégrader et sa sensibilité diminuer, en raison d'une part du vieillissement, et d'autre part de l'effet nocif des variations de température.

De plus ces amortisseurs sont relativement volumineux et donc encombrants.

Le document CH-A 137 404 décrit une roue élastique de transmission de mouvement, comprenant un paquet de lames-ressorts annulaires disposées, sur la plus grande partie de leur longueur, en appui sur une coquille ou couronne. Il en résulte que ces lames ressorts ne peuvent se déformer librement, et que leur faible déformation lorsque l'organe mené vient en butée, n'encaisse qu'une partie réduite de la totalité de l'énergie cinétique.

L'invention a pour but de proposer un motoréducteur équipé d'amortisseurs ne présentant pas ces inconvénients.

Le motoréducteur visé par l'invention est du type comportant une roue dentée d'entraînement, un organe de sortie emboîté sur un moyeu de la roue, et des moyens amortisseurs interposés entre la roue et l'organe de sortie.

Conformément à l'invention, les moyens amortisseurs sont constitués par au moins un ressort métallique plat disposé de manière à pouvoir se déformer librement et à encaisser la totalité de l'énergie cinétique.

L'utilisation de matériaux métalliques pour constituer le ou les amortisseurs confère à ceux-ci une relative insensibilité au vieillissement et aux effets thermiques, tandis que sa conformation plate diminue sensiblement son encombrement.

Suivant un mode de réalisation de l'invention, le ressort est formé de deux branches flexibles symétriques l'une de l'autre par rapport à un plan médian, et chaque branche comporte une circonvolution dont une première section est conformée pour prendre appui sur le moyeu, et une seconde section incurvée, reliée par un repli à la première section, présente une partie terminale découpée de façon à constituer un plat perpendiculaire au plan du ressort, et adapté pour servir d'appui à des pièces de la roue dentée et de l'organe de sortie, telles que des nervures circulaires coaxiales.

Il est possible d'utiliser soit un seul ressort plat convenablement dimensionné, soit deux ou plusieurs ressorts, répartis sur la périphérie du moyeu de la roue.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en coupe diamétrale suivant 1/1 de la Fig.2, d'une roue dentée d'un motoréducteur électrique, équipé intérieurement d'un ressort amortisseur plat selon l'invention.
La figure 2 est une vue en élévation du ressort amortisseur et de la roue dentée de la Fig.1.

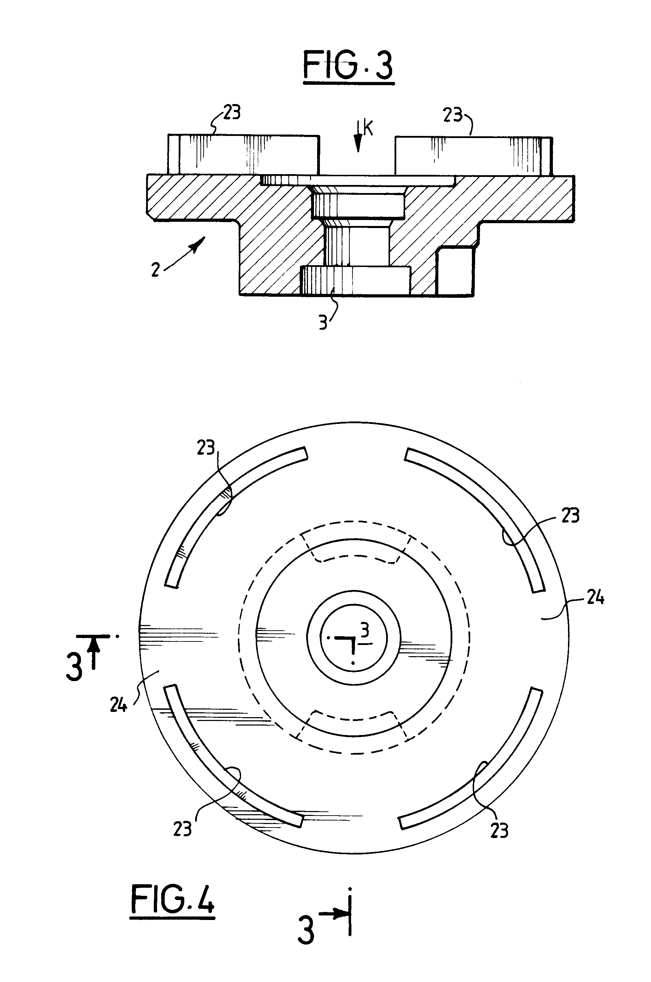

La figure 3 est une vue en coupe radiale suivant 3/3 de la Fig.4 d'un organe de sortie du motoréducteur pouvant venir coiffer le moyeu de la roue des Fig.1 et 2 et coopérer avec le ressort amortisseur.
La figure 4 est une vue en élévation suivant la direction de la flèche K de la Fig.3.
La figure 5 est une vue en élévation partielle à échelle agrandie, correspondant à la Fig.2, montrant les positions de l'organe de sortie et d'une branche du ressort amortisseur avant et après l'arrivée en butée de la vitre.

Le motoréducteur d'entraînement de la vitre dans un lève-vitre électrique de véhicule est d'un type connu en soi, et qui ne nécessite pas de description détaillée.

Ce motoréducteur comprend une roue dentée 1 d'entraînement d'un organe de sortie 2 percé d'un orifice axial 3 lui permettant de venir s'emboîter sur un moyeu 4 de la roue 1. La roue 1 est pourvue d'une denture 5 coopérant avec une vis sans fin non représentée et équipée, sur sa face intérieure entourant le moyeu 4, d'un ressort métallique plat 6a, disposé autour du moyeu 4. Ce ressort 6a est formé de deux branches flexibles 7, symétriques l'une de l'autre par rapport à un plan médian P, perpendiculaire au plan du ressort 6a. Chaque branche 7 comporte une circonvolution dont une première section incurvée 8 s'étend sensiblement sur une demi circonférence du moyeu 4 dont elle épouse le contour en prenant appui sur celui-ci, et une seconde section 9, incurvée et reliée par un repli 11 à la première section 8.

Chaque seconde section 9, qui s'étend à peu près coaxialement à la première section 8, se prolonge par un tronçon radial 12, situé dans le plan général du ressort 6a. Chaque tronçon 12 est lui-même prolongé par une partie terminale découpée de façon à constituer un plat 13 perpendiculaire au plan du ressort 6a, et une griffe terminale 14 prolongeant le plat 13.

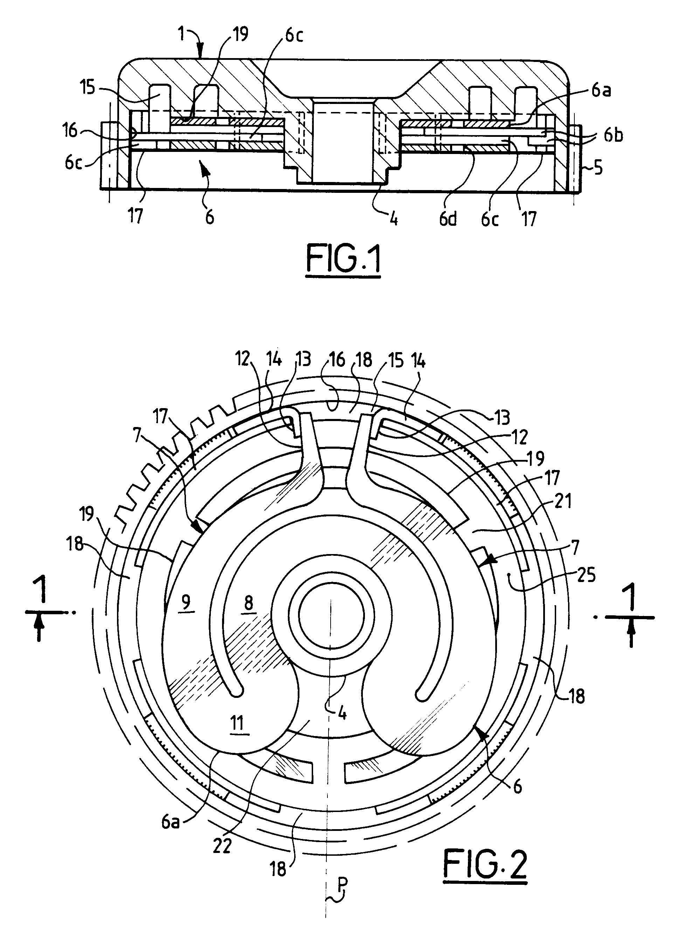

Cette griffe 14 est recourbée approximativement à angle droit avec le plat 13 et s'étend sur un secteur circulaire, dans une gorge 15 délimitée entre la paroi 16 de la roue 1, et des nervures circulaires 17 de même rayon, solidaires du moyeu, réparties sur le pourtour intérieur de la roue 1. Dans l'exemple décrit, ces nervures 17 sont au nombre de quatre, séparées par des intervalles 18. Les extrémités en vis-à-vis de deux nervures consécutives 17 forment des appuis de butée pour les plats associés 13 de chaque branche 7 du ressort 6a (Fig.2). D'autres nervures circulaires 19, séparées par des intervalles 21 et coaxiales au moyeu 4, sont ménagées entre ce dernier et les nervures 17. Le moyeu 4 est entouré à sa base par une partie annulaire 22 ayant la même épaisseur dans la direction axiale que les nervures 19, et définissant avec celle-ci une face plane d'appui pour le ressort 6a.

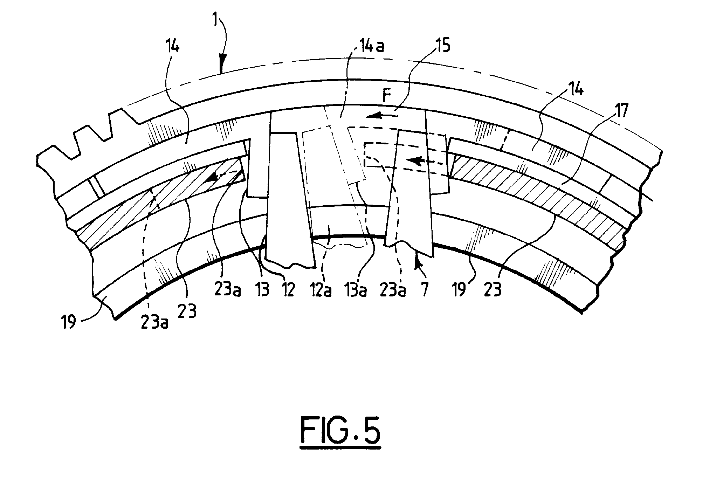

L'organe de sortie 2 comporte, sur sa face tournée vers le moyeu 4, plusieurs nervures circulaires 23 de même rayon, s'étendant autour du passage central 3 et séparées par des intervalles angulaires 24. Ces nervures 23 sont dimensionnées pour pouvoir pénétrer dans la gorge 25 délimitée entre les nervures 17 et 19 de la roue dentée 1. Ainsi, lorsque le ressort 6a est en place, en appui sur la base 22 et les nervures 19 (Fig.2), avec ses deux sections 8 qui enveloppent le moyeu 4 sur la plus grande partie de sa circonférence, les deux plats 13 sont maintenus en appui sur les extrémités contiguës des nervures 17, tandis que les griffes 14 s'étendent dans la gorge 15 et assurent le maintien en place du ressort 6a. Lorsque l'organe de sortie 2 vient s'emboîter sur le moyeu 4, ses nervures 23 viennent pénétrer dans la gorge 25, de telle sorte que les deux extrémités en vis-à-vis 23a de deux nervures adjacentes 23 soient pratiquement au contact des plats 13 (Fig.5).

Plusieurs ressorts plats 6, peuvent être empilés les uns sur les autres, les extrémités 12, 13, 14 de chacun d'eux étant ancrées dans les ouvertures correspondantes 18. Ces ressorts sont au nombre de quatre (6a, 6b, 6c, 6d) dans l'exemple représenté, ce nombre pouvant évidemment varier.

Lorsque la vitre vient en arrêt de butée en fin de trajectoire, l'organe de sortie 3 est brusquement arrêté dans sa rotation, tandis que la roue 1 continue momentanément à tourner. Ce déplacement en rotation de la roue 1 au-delà de l'arrêt de l'organe de sortie 2 entraîne un déplacement relatif de la roue 1 et de l'organe 2 : sur la Fig.5 on voit ainsi que l'une des branches 7 du ressort 6a, en fonction du sens de rotation de la roue 1, par exemple la branche 7 de droite, subit un effort F qui rapproche le tronçon radial 12, le plat 13 et la griffe 14, des parties correspondantes de la seconde branche 7, jusqu'à ce que la roue 1 soit à son tour complètement arrêtée. Ainsi après un déplacement angulaire dont l'amplitude dépend de celle de l'effort F et des caractéristiques du ressort 6a, la griffe 14, le plat 13 et le tronçon 12, ainsi que la nervure 23 adjacente, viennent prendre la position repérée 14a, 13a, 12a et 23a (Fig.5), dans laquelle le ressort 6a subit sa compression maximum.

Bien entendu la seconde nervure 23, située à gauche sur la Fig.5, parcourt le même angle que l'autre nervure 23 et vient en position 23a. Il en est de même pour les trois autres ressorts 6b, 6c, 6d.

Les ressorts 6a...6d se déforment librement et encaissent la totalité de l'énergie cinétique, ce qui leur permet de remplir pleinement leur fonction d'amortisseurs. Ils peuvent être réalisés en un métal ou alliage métallique de caractéristiques mécaniques appropriées, par exemple de l'acier. Leur stabilité de fonctionnement et leur durée de vie sont très supérieures à celles des amortisseurs en caoutchouc ou en matière plastique de la technique antérieure rappelée ci-dessus. L'appui des extrémités 12, 13 des ressorts 6 sur les nervures 17 peut être réalisé par tout agencement équivalent à celui représenté.

Le motoréducteur équipé du système amortisseur selon l'invention peut être utilisé pour l'entraînement de pièces diverses, notamment d'accessoires de véhicules tels que des vitres.

## Revendications

1. Motoréducteur, destiné notamment à un lève-vitre électrique de véhicule, comportant une roue dentée (1) d'entraînement, un organe de sortie (2) emboîté sur un moyeu (4) de la roue, et des moyens amortisseurs interposés entre la roue et l'organe de sortie, caractérisé en ce que les moyens amortisseurs sont constitués par au moins un ressort métallique plat (6a) disposé de manière à pouvoir se déformer librement et à encaisser la totalité de l'énergie cinétique.

2. Motoréducteur selon la revendication 1, caractérisé en ce que le ressort (6a) est formé de deux branches flexibles (7) symétriques l'une de l'autre par rapport à un plan médian (P), et chaque branche comporte une circonvolution dont une première section (8) est conformée pour prendre appui sur le moyeu (4), et une seconde section (9) incurvée, reliée par un repli (11) à la première section (8), qui présente une partie terminale découpée de façon à constituer un plat (13) ou similaire, perpendiculaire au plan du ressort, et adapté pour servir d'appui à des pièces (17) de la roue dentée (1) et de l'organe de sortie (2), telles que des nervures circulaires coaxiales.

3. Motoréducteur selon la revendication 2, caractérisé en ce que le plat (3) de chaque branche (7) est relié à la seconde section incurvée (9) par un tronçon radial (12) situé dans le plan général du ressort (6).

4. Motoréducteur selon l'une des revendications 2 et 3, caractérisé en ce que chaque plat (13) du ressort (6a) est prolongé par une griffe terminale (14) recourbée, s'étendant sensiblement perpendiculairement au plan général du ressort, et assurant le maintien en place du ressort sur le moyeu (4) de l'organe de sortie (2) par insertion desdites griffes dans une gorge (15) délimitée par la pièce intérieure (17) de la roue (1) avec laquelle coopère le plat contigu, et la paroi périphérique (16) de ladite roue.

5. Motoréducteur selon l'une des revendications 1 à 4, caractérisé en ce qu'il comporte plusieurs ressorts plats superposés (6a...6d), dont les extrémités prennent appui entre la roue (1) et le moyeu (4).

6. Ressort métallique plat (6) amortisseur adapté pour équiper un motoréducteur conforme à l'une quelconque des revendications 1 à 5.
